# EUROPEAN PATENT APPLICATION

(11) **EP 4 624 215 A1**
(43) Date of publication of application: **01.10.2025**
(21) Application number: 25166840.6
(22) Date of filing: 27.03.2025
(51) Int. Cl.: B60K 6/387, B60K 1/00, B60K 1/02, B60K 6/40, B60K 6/448, B60K 7/00, B60W 10/02, B60W 10/06, B60W 10/08, B60W 10/12, B60W 10/16

(54) **DRIVE ASSEMBLY AND VEHICLE HAVING THE SAME**

(30) Priority: 29.03.2024 CN 202410396035
(71) Applicant: BYD Company Limited, Shenzhen, Guangdong 518118 (CN)
(72) Inventor: ZHANG, Feng, Shenzhen, 518118 (CN); LIAO, Yinsheng, Shenzhen, 518118 (CN); LAN, Xin, Shenzhen, 518118 (CN); GUO, Yifa, Shenzhen, 518118 (CN); LIU, Wentao, Shenzhen, 518118 (CN)
(74) Representative: Taor, Simon Edward William

(57) **Abstract**

The present invention discloses a drive assembly and a vehicle having the same. The drive assembly includes: a first motor and a first wheel, a second motor and a second wheel, and an engine. The first motor is selectively connected to the first wheel. The second motor is connected to the second wheel. The engine is selectively connected to the first motor. The engine is selectively connected to at least one of the first wheel and the second wheel. The first wheel and the second wheel are front axle wheels or rear axle wheels. According to the drive assembly of the present invention, the first motor can generate power when connecting to the engine. In this way, arranging a generator can be omitted, so that production costs can be reduced. In addition, differential power output can be implemented, so that more usage requirements of a user are satisfied, and user experience is improved.

## Description

### FIELD

The present invention relates to the field of vehicle technologies, and specifically, to a drive assembly and a vehicle having the same.

### BACKGROUND

Currently, there are more hybrid electric vehicle types in the market. In a hybrid electric drive assembly, using rotation outputted by an engine to generate power to optimize a traveling state of a vehicle is also gradually used in the industry. In the related art, a generator is separately arranged to cooperate with the engine, to generate power, resulting in high production costs.

### SUMMARY

Embodiments of the present invention are intended to resolve at least one of the technical problems existing in the related art. Therefore, embodiments of the present invention provide a drive assembly. The drive assembly can reduce production costs of a vehicle, and implement differential power output of the vehicle.

Embodiments of present invention further provide a vehicle having the drive assembly.

A drive assembly according to a first aspect of the present invention includes: a first motor and a first wheel, a second motor and a second wheel, and an engine. The first motor is connected to the first wheel. The second motor is connected to the second wheel. The engine is selectively connected to the first motor. The engine is selectively connected to at least one of a first wheel and a second wheel. The first wheel and the second wheel are front axle wheels or rear axle wheels.

According to the drive assembly according to the first aspect of the present invention, the first motor can generate power when connecting to the engine. In this way, arranging a generator can be omitted, so that production costs can be reduced. In addition, differential power output can be implemented, so that more usage requirements of a user are satisfied, and user experience is improved.

According to some examples of the present invention, a first clutch is connected between an output shaft of the first motor and the engine.

According to some examples of the present invention, the first motor is selectively connected to the first wheel.

According to some examples of the present invention, the drive assembly further includes a second clutch. The second clutch is connected between the first wheel and the first motor.

According to some examples of the present invention, the drive assembly further includes the second clutch. The second clutch is connected between the engine and the first wheel.

According to some examples of the present invention, the second clutch is connected at an end of the first clutch away from the engine. The first clutch and the second clutch are co-axially connected.

According to some examples of the present invention, a first speed change gear set is connected between the first motor and the engine. The first clutch is connected between the first speed change gear set and the engine. The second clutch is connected between the first speed change gear set and the first wheel.

According to some examples of the present invention, the drive assembly further includes: a first transmission shaft, a second transmission shaft, and a third clutch. The first transmission shaft is connected between the first wheel and the first motor. The second transmission shaft is connected between the second wheel and the second motor. The third clutch is connected between the first transmission shaft and the second transmission shaft.

According to some examples of the present invention, the drive assembly further includes a differential. The differential is connected between the second clutch and the first transmission shaft. The drive assembly includes a locking mechanism. The locking mechanism has a locked state and an unlocked state. In the locked state, a housing of the differential is fixedly connected to the first transmission shaft. In the unlocked state, the first motor and/or the engine can drive the first transmission shaft and the second transmission shaft through the differential.

According to some examples of the present invention, the engine and the differential are arranged spaced away along a left-right direction of a vehicle.

According to some examples of the present invention, the second clutch is connected to the differential through a second speed change gear set. The second motor is connected to the second transmission shaft through a third speed change gear set.

According to some examples of the present invention, the drive assembly further includes: a third motor and a third wheel, and a fourth motor and a fourth wheel. The third motor is connected to the third wheel. The fourth motor is connected to the fourth wheel. The first motor is electrically connected to at least one of the second motor, the third motor, and the fourth motor respectively. The first motor is configured to supply power to the second motor, the third motor, and the fourth motor.

According to some examples of the present invention, the drive assembly further includes a third transmission shaft and a fourth transmission shaft. The third transmission shaft is connected between the third motor and the third wheel. A fourth speed change gear set is connected between the third motor and the third transmission shaft. The fourth transmission shaft is connected between the fourth motor and the fourth wheel. A fifth speed change gear set is connected between the fourth motor and the fourth transmission shaft.

According to some examples of the present invention, the drive assembly further includes a battery. The battery is electrically connected to the first motor, the second motor, the third motor, and the fourth motor. The battery is configured to supply power to the first motor, the second motor, the third motor, and the fourth motor.

According to some examples of the present invention, the first wheel and the second wheel are the front axle wheels. The drive assembly has an EV single-motor front-wheel-drive mode. In the EV single-motor front-wheel-drive mode, the first transmission shaft and the second transmission shaft are connected, and the first motor drives the first transmission shaft and the second transmission shaft to rotate, to drive the first wheel and the second wheel.

According to some examples of the present invention, the drive assembly has an EV three-motor four-wheel-drive mode. In the EV three-motor four-wheel-drive mode, the first transmission shaft and the second transmission shaft are connected, the first motor drives the first transmission shaft and the second transmission shaft to rotate, to drive the first wheel and the second wheel, the third motor drives the third wheel through the third transmission shaft, and the fourth motor drives the fourth wheel through the fourth transmission shaft.

According to some examples of the present invention, the first wheel and the second wheel are the front axle wheels. The drive assembly has an HEV series rear-wheel-drive mode. In the HEV series rear-wheel-drive mode, the engine is connected to the first motor to drive the first motor to generate power, and the first motor is connected to the third motor and the fourth motor, to supply power to the third motor and the fourth motor.

According to some examples of the present invention, the first wheel and the second wheel are the front axle wheels. The drive assembly has an HEV parallel front-wheel-drive mode. In the HEV parallel front-wheel-drive mode, the first transmission shaft and the second transmission shaft are connected, the engine drives the first transmission shaft and the second transmission shaft to rotate, to drive the first wheel and the second wheel, and the engine is connected to the first motor to drive the first motor to generate power or the first motor drives the first transmission shaft and the second transmission shaft to rotate.

According to some examples of the present invention, the drive assembly has an HEV parallel four-wheel-drive mode. In the HEV parallel four-wheel-drive mode, the engine drives the first transmission shaft and the second transmission shaft to rotate, to drive the first wheel and the second wheel, the third motor drives the third wheel through the third transmission shaft, and the fourth motor drives the fourth wheel through the fourth transmission shaft.

According to some examples of the present invention, the first wheel and the second wheel are the front axle wheels. The drive assembly has an emergency front-wheel-drive mode. In the emergency front-wheel-drive mode, the first transmission shaft and the second transmission shaft are connected, and the second motor drives the first transmission shaft and the second transmission shaft to rotate, to drive the first wheel and the second wheel.

A vehicle according to examples of a second aspect of the present invention includes the drive assembly according to the first aspect of the present invention.

According to the vehicle according to the second aspect of the present invention, the drive assembly according to the first aspect of the present invention is arranged to satisfy more usage requirements of a user and reduce production costs.

The additional aspects and advantages of the present invention will be provided in the descriptions below, parts of which will become apparent from the descriptions below, or will be understood by the practice of the present invention.

### BRIEF DESCRIPTION OF THE DRAWINGS

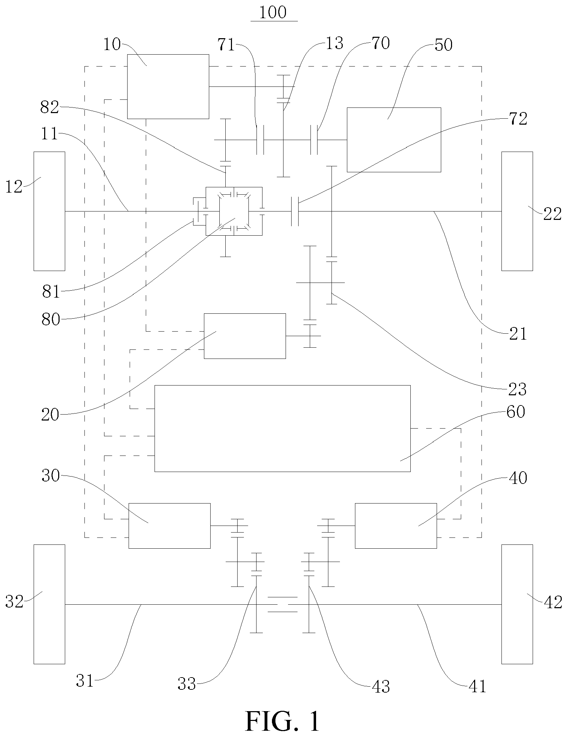

FIG. 1 is a schematic diagram of a drive assembly according to an example of the present invention.

In the drawings:
100: drive assembly;
10: first motor; 11: first transmission shaft; 12: first wheel; 13: first speed change gear set;
20: second motor; 21: second transmission shaft; 22: second wheel; 23: third speed change gear set;
30: third motor; 31: third transmission shaft; 32: third wheel; 33: fourth speed change gear set;
40: fourth motor; 41: fourth transmission shaft; 42: fourth wheel; 43: fifth speed change gear set;
50: engine;
60: battery;
70: first clutch; 71: second clutch; 72: third clutch;
80: differential; 81: locking mechanism; and 82: second speed change gear set.

### DETAILED DESCRIPTION

The following describes examples of the present invention in detail. Examples of the examples are shown in the accompanying drawings, in which the same or similar reference signs in all the accompanying drawings indicate same or similar components or components having the same or similar functions. The following examples described with reference to the accompanying drawings are exemplary, which are used only to explain the present invention, and cannot be construed as a limitation to the present invention.

A drive assembly 100 according to examples of a first aspect of the present invention is described below with reference to FIG. 1.

As shown in FIG. 1, a drive assembly 100 according to the examples of the first aspect of the present invention includes a first motor 10, a first wheel 12, a second motor 20, a second wheel 22, and an engine 50.

Specifically, the first motor 10 is connected to the first wheel 12. The second motor 20 is connected to the second wheel 22. The engine 50 may be selectively connected to the first motor 10. The engine 50 may be selectively connected to at least one of the first wheel 12 and the second wheel 22. The first wheel 12 and the second wheel 22 are front axle wheels or rear axle wheels.

In other words, the engine 50 may be connected to one of the first wheel 12 and the second wheel 22, or the engine 50 may be connected to both the first wheel 12 and the second wheel 22.

When the engine 50 is connected to the first motor 10, the engine 50 may drive a rotor of the first motor 10 to rotate. A person skilled in the art may understand that, in a process in which the engine 50 drives the rotor of the first motor 10 to rotate, magnetic induction line cutting is performed on the first motor 10, so that the first motor 10 may generate power. In this way, the first motor 10 can charge a battery 60, and the first motor 10 can also be electrically connected to the second motor 20 to drive the second motor 20. In this way, separately arranging a generator can be omitted, so that production costs of a vehicle can be reduced.

During traveling of the vehicle, the engine 50 may separately drive one of the first wheel 12 and the second wheel 22 to rotate. The engine 50 may also drive the first wheel 12 and the second wheel 22 to rotate. The first motor 10 may drive the first wheel 12 to rotate. The second motor 20 may drive the second wheel 22 to rotate. In this way, during traveling of the vehicle, differential power output of the vehicle can be implemented, and a user can select differential power output modes based on different usage operation conditions, so that more usage requirements of the user are satisfied.

During product design, a type and a parameter of the engine 50 or types and parameters of the first motor 10 and the second motor 20 may be adjusted, to satisfy more product design requirements.

According to the drive assembly 100 according to the first example of the present invention, the first motor 10 can generate power when connecting to the engine 50. In this way, arranging a generator can be omitted, so that the production costs can be reduced. In addition, differential power output can be implemented, so that more usage requirements of the user are satisfied, and user experience is improved.

In some examples of the present invention, as shown in FIG. 1, a first clutch 70 is connected between an output shaft of the first motor 10 and the engine 50. The first clutch 70 is arranged. The first clutch 70 may control the connection between the engine 50 and the first motor 10 to be interrupted, so that the drive assembly 100 can have more power output states. During traveling of the vehicle, the user or a control system of the vehicle may adjust a connection state between the engine 50 and the first motor 10 based on the usage requirements, so that the user experience is further improved. During product design, a model or a parameter of the first clutch 70 may be adjusted, to satisfy more product design requirements.

In some examples of the present invention, as shown in FIG. 1, the first motor 10 and the first wheel 12 may be selectively connected. During traveling of the vehicle, the user or the control system of the vehicle may adjust a connection state between the first wheel 12 and the first motor 10 based on the usage requirements, so that the user experience is further improved.

In some examples of the present invention, as shown in FIG. 1, the drive assembly 100 further includes a second clutch 71. The second clutch 71 is connected between the first wheel 12 and the first motor 10. The second clutch 71 is arranged. The second clutch 71 may control the connection between the first wheel 12 and the first motor 10 to be interrupted, so that the drive assembly 100 can have more power output states. During traveling of the vehicle, the user or the control system of the vehicle may adjust a connection state between the first wheel 12 and the first motor 10 based on the usage requirements, so that the user experience is further improved. During product design, a model or a parameter of the second clutch 71 may be adjusted, to satisfy more product design requirements.

In some examples of the present invention, as shown in FIG. 1, the drive assembly 100 further includes the second clutch 71. The second clutch 71 is connected between the engine 50 and the first wheel 12. The second clutch 71 is arranged. The second clutch 71 may control the connection between the engine 50 and the first wheel 12 to be interrupted, so that the drive assembly 100 can have more power output states. During traveling of the vehicle, the user or the control system of the vehicle may adjust a connection state between the engine 50 and the first wheel 12 based on the usage requirements, so that the user experience is further improved. During product design, the model or the parameter of the second clutch 71 may be adjusted, to satisfy more product design requirements.

In some examples of the present invention, the second clutch 71 is connected to an end of the first clutch 70 away from the engine 50. Therefore, the engine 50 and the first motor 10 may have large arrange space, and weights of the engine 50 and the first motor 10 are evenly distributed on the vehicle, so that uniformity of gravity distribution of the vehicle is improved.

The first clutch 70 and the second clutch 71 are co-axially connected. In this way, the arrange space can be reduced, and a quantity of components can be reduced, so that arrangement of the drive assembly 100 on the vehicle is easily implemented, and the production costs are reduced. The first clutch 70 and the second clutch 71 are connected between the engine 50 and the first wheel 12. When the first clutch 70 and the second clutch 71 are closed simultaneously, the engine 50 is connected to the first wheel 12.

In some examples of the present invention, as shown in FIG. 1, a first speed change gear set 13 is connected between the first motor 10 and the engine 50, the first clutch 70 is connected between the first speed change gear set 13 and the engine 50, and the second clutch 71 is connected between the first speed change gear set 13 and the first wheel 12. The first speed change gear set 13 is arranged. When the first clutch 70 is closed to connect the engine 50 to the first motor 10, the first speed change gear set 13 may adjust a rotation speed ratio between the engine 50 and the first motor 10, so that generated power of the first motor 10 can be adapted to an operation condition of the vehicle. During product design, a size, a quantity of gears, or a gear ratio between gears of the first speed change gear set 13 may be adjusted, to satisfy more product design requirements.

In some examples of the present invention, as shown in FIG. 1, the drive assembly 100 further includes a first transmission shaft 11, a second transmission shaft 21, and a third clutch 72. The first transmission shaft 11 is connected between the first wheel 12 and the first motor 10. The second transmission shaft 21 is connected between the second wheel 22 and the second motor 20. The third clutch 72 is connected between the first transmission shaft 11 and the second transmission shaft 21.

The first transmission shaft 11 may provide a support for the first wheel 12, and the second transmission shaft 21 may provide a support for the second wheel 22. The first transmission shaft 11 is connected between the first wheel 12 and the first motor 10, and the second transmission shaft 21 is connected between the second wheel 22 and the second motor 20. Therefore, arrangement of the first motor 10 and the second motor 20 on the vehicle may be easily implemented. The third clutch 72 is arranged. The third clutch 72 may control the connection between the first transmission shaft 11 and the second transmission shaft 21 to be interrupted. When the third clutch 72 is closed, transmission may be performed between the first transmission shaft 11 and the second transmission shaft 21. In this way, the first motor 10, the second motor 20, and the engine 50 can all drive the first wheel 12 and the second wheel 22, so that the drive assembly 100 can have more power output states. During traveling of the vehicle, the user or the control system of the vehicle may adjust the connection between the first transmission shaft 11 and the second transmission shaft 21 to be interrupted based on the usage requirements, so that more usage requirements of the user are satisfied, and the user experience is further improved. During product design, a model or a parameter of the third clutch 72 may be adjusted, to satisfy more product design requirements.

In some examples of the present invention, as shown in FIG. 1, the drive assembly 100 further includes a differential 80. The differential 80 is connected between the second clutch 71 and the first transmission shaft 11. The drive assembly 100 further includes a locking mechanism. The locking mechanism has a locked state and an unlocked state. In the locked state, a housing of the differential 80 is fixedly connected to the first transmission shaft 11. In this case, the differential 80 does not perform differential power distribution, and the differential 80 directly outputs power input to the differential 80. During product design, a model or a parameter of the differential 80 may be adjusted, to satisfy more product design requirements.

In the unlocked state, the first motor 10 and/or the engine 50 can drive the first transmission shaft 11 and the second transmission shaft 21 through the differential 80. In other words, the first motor 10 may drive the first transmission shaft 11 and the second transmission shaft 21 through the differential 80, or the engine 50 may drive the first transmission shaft 11 and the second transmission shaft 21 through the differential 80, or the first motor 10 and the engine 50 may drive the first transmission shaft 11 and the second transmission shaft 21 through the differential 80. In the unlocked state, the differential 80 may perform differential power distribution on power input to the differential 80.

Therefore, the drive assembly 100 can have more power output modes. During traveling of the vehicle, the user or the control system of the vehicle may adjust an operating state of the differential 80, so that more usage requirements of the user are satisfied, and the user experience is further improved.

In some examples of the present invention, the engine 50 and the differential 80 are arranged spaced away along a left-right direction of the vehicle. A person skilled in the art may understand that, in a conventional fuel vehicle, the engine 50 and the differential 80 are arranged spaced away along the left-right direction of the vehicle. In this way, during production, a production line of the vehicle having the drive assembly 100 in the examples can be changed less than a production line of the conventional fuel vehicle, so that production costs of the vehicle are further reduced.

In some examples of the present invention, as shown in FIG. 1, the second clutch 71 is connected to the differential 80 through a second speed change gear set 82. In this way, the second speed change gear set 82 may be connected between the differential 80 and the first motor 10 and the engine 50. The second speed change gear set 82 may adjust a gear ratio between the first motor 10 and the engine 50 and the differential 80. Therefore, driving for the differential 80 by the first motor 10 and/or the engine 50 may be adapted to the usage operation conditions. In addition, there is no need to arrange speed change gear sets between the differential 80 and the first motor 10 and between the differential 80 and the engine 50 respectively, so that the production costs of the vehicle are further reduced. During product design, a size, a quantity of gears, or a gear ratio between gears of the second speed change gear set 82 may be adjusted, to satisfy more product design requirements.

The second motor 20 is connected to the second transmission shaft 21 through a third speed change gear set 23. The third speed change gear set 23 is arranged. The third speed change gear set 23 may adjust a gear ratio between the second motor 20 and the second transmission shaft 21. Therefore, driving for the second transmission shaft 21 by the second motor 20 may be adapted to the usage operation conditions. During product design, a size, a quantity of gears, or a gear ratio between gears of the third speed change gear set 23 may be adjusted, to satisfy more product design requirements.

In some examples of the present invention, a transition gear set is further arranged between the second clutch 71 and the differential 80. In this way, during product design, the connection between the first clutch 70 and the differential 80 may be easier to implement through the transition gear set, so that difficulty in the product design is reduced.

In some examples of the present invention, a reversing gear set is further arranged between the second clutch 71 and the differential 80. The reversing gear set is arranged. The reversing gear set may change directions of rotation of the engine 50 and the first motor 10 transmitted to the differential 80, so that more usage requirements of the user are satisfied, and user experience is further improved.

In some examples of the present invention, as shown in FIG. 1, the drive assembly 100 further includes a third motor 30, a third wheel 32, a fourth motor 40, and a fourth wheel 42.

The third motor 30 is connected to the third wheel 32. The fourth motor 40 is connected to the fourth wheel 42. The first motor 10 is electrically connected to at least one of the second motor 20, the third motor 30, and the fourth motor 40 respectively. The first motor 10 is configured to supply power to the second motor 20, the third motor 30, and the fourth motor 40.

In other words, the first motor may be electrically connected to one of the second motor 20, the third motor 30, and the fourth motor 40. Alternatively, the first motor may be electrically connected to two of the second motor 20, the third motor 30, and the fourth motor 40. Alternatively, the first motor may be electrically connected to the second motor 20, the third motor 30, and the fourth motor 40.

In this way, during operation of the vehicle, based on the usage requirements, the engine 50 may drive the first motor 10 to generate power, and the first motor 10 may supply power to the second motor 20, the third motor 30, and the fourth motor 40. Therefore, driving currents in the second motor 20, the third motor 30, and the fourth motor 40 are improved, and driving forces of the second motor 20, the third motor 30, and the fourth motor 40 are further improved. During traveling of the vehicle, the user or the control system of the vehicle may determine electrical connection states of the first motor 10, the second motor 20, the third motor 30, and the fourth motor 40, so that more usage requirements of the user are satisfied, and the user experience is further improved.

In some examples of the present invention, as shown in FIG. 1, the drive assembly 100 further includes a third transmission shaft 31 and a fourth transmission shaft 41. The third transmission shaft 31 is connected between the third motor 30 and the third wheel 32. A fourth speed change gear set 33 is connected between the third motor 30 and the third transmission shaft 31. The fourth transmission shaft 41 is connected between the fourth motor 40 and the fourth wheel 42. A fifth speed change gear set 43 is connected between the fourth motor 40 and the fourth transmission shaft 41. The third transmission shaft 31 may provide a support for the third wheel 32. The fourth transmission shaft 41 may provide a support for the fourth wheel 42.

A third transmission shaft 31 is connected between the third motor 30 and the third wheel 32. A fourth transmission shaft 41 is connected between the fourth motor 40 and the fourth wheel 42. Therefore, arrangement of the third motor 30 and the fourth motor 40 on the vehicle may be easily implemented.

The fourth speed change gear set 33 is arranged. The fourth speed change gear set 33 may adjust a gear ratio between the third motor 30 and the third transmission shaft 31. Therefore, driving for the third transmission shaft 31 by the third motor 30 may be adapted to the usage operation conditions. During product design, a size, a quantity of gears, or a gear ratio between gears of the fourth speed change gear set 33 may be adjusted, to satisfy more product design requirements.

The fifth speed change gear set 43 is arranged. The fifth speed change gear set 43 may adjust a gear ratio between the fourth motor 40 and the fourth transmission shaft 41. Therefore, driving for the fourth transmission shaft 41 by the fourth motor 40 can be adapted to the usage operation conditions. During product design, a size, a quantity of gears, or a gear ratio between gears of the fifth speed change gear set 43 may be adjusted, to satisfy more product design requirements.

In some examples of the present invention, the drive assembly 100 further includes a battery 60. The battery 60 is electrically connected to the first motor 10, the second motor 20, the third motor 30, and the fourth motor 40. The battery 60 is configured to supply power to the first motor 10, the second motor 20, the third motor 30, and the fourth motor 40.

During traveling of the vehicle, the engine 50 may separately drive one of the first wheel 12 and the second wheel 22 to rotate, and the engine 50 may also drive the first wheel 12 and the second wheel 22 to rotate. When the battery 60 supplies power to the first motor 10, the second motor 20, the third motor 30, and the fourth motor 40, the first motor 10 may drive the first wheel 12 to rotate, the second motor 20 may drive the second wheel 22 to rotate, the third motor 30 may drive the third wheel 32 to rotate, and the fourth motor 40 may drive the fourth wheel 42 to rotate.

In this way, during traveling of the vehicle, the engine 50 may drive the wheel to rotate, or the motor may drive the wheel to rotate, or both the engine 50 and the motor may drive the wheel to rotate. When the motor drives the wheel to rotate, the four motors may simultaneously drive the wheel to rotate, or some of the four motors may drive the wheel to rotate. In this way, the drive assembly 100 may implement differential power output, and the user may select differential power output modes based on different usage operation conditions, so that more usage requirements of the user are satisfied.

During traveling of the vehicle, when the vehicle does not need driving force during traveling in a downhill road or during traveling, the vehicle may drive rotors of the first motor 10, the second motor 20, the third motor 30, and the fourth motor 40 to rotate to charge the battery 60, to implement energy recovery.

In some examples of the present invention, the first wheel 12 and the second wheel 22 are front axle wheels, and the drive assembly 100 has an electric vehicle (electric vehicle, EV) single-motor front-wheel-drive mode. In the EV single-motor front-wheel-drive mode, the first transmission shaft 11 and the second transmission shaft 21 are connected, and the first motor 10 drives the first transmission shaft 11 and the second transmission shaft 21 to rotate, to drive the first wheel 12 and the second wheel 22. In this case, the first clutch 70 is in a disconnected state. The second clutch 71 and the third clutch 72 are in a connected state. The differential 80 is in the unlocked state. The battery 60 supplies power to the first motor 10 to rotate the first motor 10. The first motor 10 outputs power to the differential 80 through the second speed change gear set 82. The differential 80 distributes power to the first transmission shaft 11 and the second transmission shaft 21, so that the first transmission shaft 11 and the second transmission shaft 21 rotate the first wheel 12 and the second wheel 22. Therefore, the first wheel 12 and the second wheel 22 are rotated to drive the vehicle to travel. When the vehicle turns, the differential 80 may distribute power to the first transmission shaft 11 and the second transmission shaft 21 differentially, so that the first wheel 12 and the second wheel 22 rotate differentially, and a turning process of the vehicle is smoother.

In some examples of the present invention, the first wheel 12 and the second wheel 22 are the front axle wheels. The drive assembly 100 has an EV dual-motor front-wheel-drive mode. In the EV dual-motor front-wheel-drive mode, the first motor 10 drives the first wheel 12 through the first transmission shaft 11, and the second motor 20 drives the second wheel 22 through the second transmission shaft 21. In this case, the first clutch 70 and the third clutch 72 are in the disconnected state. The second clutch 71 is in the connected state. The differential 80 is in the locked state. The battery 60 supplies power to the first motor 10 and the second motor 20. The first motor 10 outputs power to the differential 80 through the second speed change gear set 82. The differential 80 transmits power to the first transmission shaft 11, so that the first transmission shaft 11 drives the first wheel 12 to rotate. The second motor 20 transmits power to the second transmission shaft 21 through the third speed change gear set 23, so that the second transmission shaft 21 drives the second wheel 22 to rotate. Therefore, the first wheel 12 and the second wheel 22 are rotated to drive the vehicle to travel.

In some examples of the present invention, the first wheel 12 and the second wheel 22 are the front axle wheels, and the drive assembly 100 has an EV dual-motor rear-wheel-drive mode. In the EV dual-motor rear-wheel-drive mode, the third motor 30 drives the third wheel 32 through the third transmission shaft 31, and the fourth motor 40 drives the fourth wheel 42 through the fourth transmission shaft 41. In this case, the first clutch 70 and the second clutch 71 are in the disconnected state. The battery 60 supplies power to the third motor 30 and the fourth motor 40. The third motor 30 transmits power to the third transmission shaft 31 through the fourth speed change gear set 33, so that the third transmission shaft 31 drives the third wheel 32 to rotate. The fourth motor 40 transmits power to the fourth transmission shaft 41 through the fifth speed change gear set 43, so that the fourth transmission shaft 41 drives the fourth wheel 42 to rotate. Therefore, the third wheel 32 and the fourth wheel 42 are rotated to drive the vehicle to travel.

In some examples of the present invention, the drive assembly 100 has an EV three-motor four-wheel-drive mode. In the EV three-motor four-wheel-drive mode, the first transmission shaft 11 and the second transmission shaft 21 are connected, the first motor 10 drives the first transmission shaft 11 and the second transmission shaft 21 to rotate, to drive the first wheel 12 and the second wheel 22, the third motor 30 drives the third wheel 32 through the third transmission shaft 31, and the fourth motor 40 drives the fourth wheel 42 through the fourth transmission shaft 41. In this case, the first clutch 70 is in the disconnected state. The second clutch 71 and the third clutch 72 are in the connected state. The differential 80 is in the unlocked state. The battery 60 supplies power to the first motor 10, the third motor 30 and the fourth motor 40. The first motor 10 outputs power to the differential 80 through the second speed change gear set 82. The differential 80 distributes power to the first transmission shaft 11 and the second transmission shaft 21, so that the first transmission shaft 11 and the second transmission shaft 21 rotate the first wheel 12 and the second wheel 22. The third motor 30 transmits power to the third transmission shaft 31 through the fourth speed change gear set 33, so that the third transmission shaft 31 drives the third wheel 32 to rotate. The fourth motor 40 transmits power to the fourth transmission shaft 41 through the fifth speed change gear set 43, so that the fourth transmission shaft 41 drives the fourth wheel 42 to rotate. Therefore, the first wheel 12, the second wheel 22, the third wheel 32, and the fourth wheel 42 are rotated to drive the vehicle to travel. When the vehicle turns, the differential 80 distributes power to the first transmission shaft 11 and the second transmission shaft 21, so that the first wheel 12 and the second wheel 22 rotate differentially, and the turning process of the vehicle is smoother.

In some examples of the present invention, the drive assembly 100 has an EV four-motor four-wheel-drive mode. In the EV four-motor four-wheel-drive mode, the first motor 10 drives the first wheel 12 through the first transmission shaft 11, the second motor 20 drives the second wheel 22 through the second transmission shaft 21, the third motor 30 drives the third wheel 32 through the third transmission shaft 31, and the fourth motor 40 drives the fourth wheel 42 through the fourth transmission shaft 41. In this case, the first clutch 70 and the third clutch 72 are in the disconnected state. The second clutch 71 is in the connected state. The differential 80 is in the locked state. The battery 60 supplies power to the first motor 10, the second motor 20, the third motor 30, and the fourth motor 40. The first motor 10 outputs power to the differential 80 through the second speed change gear set 82. The differential 80 transmits power to the first transmission shaft 11, so that the first transmission shaft 11 drives the first wheel 12 to rotate. The second motor 20 transmits power to the second transmission shaft 21 through the third speed change gear set 23, so that the second transmission shaft 21 drives the second wheel 22 to rotate. The third motor 30 transmits power to the third transmission shaft 31 through the fourth speed change gear set 33, so that the third transmission shaft 31 drives the third wheel 32 to rotate. The fourth motor 40 transmits power to the fourth transmission shaft 41 through the fifth speed change gear set 43, so that the fourth transmission shaft 41 drives the fourth wheel 42 to rotate. Therefore, the first wheel 12, the second wheel 22, the third wheel 32, and the fourth wheel 42 are rotated to drive the vehicle to travel.

In some examples of the present invention, the first wheel 12 and the second wheel 22 are the front axle wheels. The drive assembly 100 has a hybrid electric vehicle (hybrid electric vehicle, HEV) series rear-wheel-drive mode. In the HEV series rear-wheel-drive mode, the engine 50 is connected to the first motor 10 to drive the first motor 10 to generate power, and the first motor 10 is connected to the third motor 30 and the fourth motor 40, to supply power to the third motor 30 and the fourth motor 40. In this case, the first clutch 70 is in the connected state. The second clutch 71 is in the disconnected state. The battery 60 supplies power to the third motor 30 and the fourth motor 40. The engine 50 drives the first motor 10 to generate power and supplies power to the third motor 30 and the fourth motor 40. The third motor 30 transmits power to the third transmission shaft 31 through the fourth speed change gear set 33, so that the third transmission shaft 31 drives the third wheel 32 to rotate. The fourth motor 40 transmits power to the fourth transmission shaft 41 through the fifth speed change gear set 43, so that the fourth transmission shaft 41 drives the fourth wheel 42 to rotate. Therefore, the third wheel 32 and the fourth wheel 42 are rotated to drive the vehicle to travel. When the driving force of the third motor 30 and the fourth motor 40 is sufficient, the first motor 10 may charge the battery 60.

In some examples of the present invention, the first wheel 12 and the second wheel 22 are the front axle wheels, and the drive assembly 100 has an HEV parallel front-wheel-drive mode. In the HEV parallel front-wheel-drive mode, the first transmission shaft 11 and the second transmission shaft 21 are connected, the engine 50 drives the first transmission shaft 11 and the second transmission shaft 21 to rotate, to drive the first wheel 12 and the second wheel 22, and the engine 50 is connected to the first motor 10 drive the first motor 10 to generate power, or the first motor 10 drives the first transmission shaft 11 and the second transmission shaft 21 to rotate. In this case, the first clutch 70, the second clutch 71, and the third clutch 72 are in the connected state. The differential 80 is in the unlocked state. The engine 50 transmits power to the differential 80 through the second speed change gear set 82. The differential 80 distributes power to the first transmission shaft 11 and the second transmission shaft 21, so that the first transmission shaft 11 and the second transmission shaft 21 rotate the first wheel 12 and the second wheel 22. Therefore, the first wheel 12 and the second wheel 22 are rotated to drive the vehicle to travel. When the engine 50 has insufficient power, the battery 60 supplies power to the first motor 10. The first motor 10 outputs power to the differential 80 together with the engine 50, to drive the first wheel 12 and the second wheel 22 to rotate. When the engine 50 has excessive power, the engine 50 simultaneously drives the first motor 10 to generate power and charge the battery 60. When the vehicle turns, the differential 80 distributes power to the first transmission shaft 11 and the second transmission shaft 21 differentially, so that the first wheel 12 and the second wheel 22 rotate differentially, and the turning process of the vehicle is smoother.

In some examples of the present invention, the drive assembly 100 has an HEV parallel four-wheel-drive mode. In the HEV parallel four-wheel-drive mode, the engine 50 drives the first transmission shaft 11 and the second transmission shaft 21 to rotate, to drive the first wheel 12 and the second wheel 22, the third motor 30 drives the third wheel 32 through the third transmission shaft 31, and the fourth motor 40 drives the fourth wheel 42 through the fourth transmission shaft 41. In this case, the first clutch 70, the second clutch 71, and the third clutch 72 are in the connected state. The differential 80 is in the unlocked state. The battery 60 supplies power to the third motor 30 and the fourth motor 40. The engine 50 transmits power to the differential 80 through the second speed change gear set 82. The differential 80 distributes power to the first transmission shaft 11 and the second transmission shaft 21, so that the first transmission shaft 11 and the second transmission shaft 21 rotate the first wheel 12 and the second wheel 22. The third motor 30 transmits power to the third transmission shaft 31 through the fourth speed change gear set 33, so that the third transmission shaft 31 drives the third wheel 32 to rotate. The fourth motor 40 transmits power to the fourth transmission shaft 41 through the fifth speed change gear set 43, so that the fourth transmission shaft 41 drives the fourth wheel 42 to rotate. Therefore, the first wheel 12, the second wheel 22, the third wheel 32, and the fourth wheel 42 are rotated to drive the vehicle to travel.

In some examples of the present invention, the first wheel 12 and the second wheel 22 are the front axle wheels. The drive assembly 100 has an emergency front-wheel-drive mode. In the emergency front-wheel-drive mode, the first transmission shaft 11 and the second transmission shaft 21 are connected, and the second motor 20 drives the first transmission shaft 11 and the second transmission shaft 21 to rotate, to drive the first wheel 12 and the second wheel 22. In this case, the first clutch 70 and the second clutch 71 are in the disconnected state. The third clutch 72 is in the connected state. The differential 80 is in the locked state. The battery 60 supplies power to the second motor 20. The second motor 20 transmits power to the second transmission shaft 21 and the first transmission shaft 11 through the third speed change gear set 23, so that the first transmission shaft 11 and the second transmission shaft 21 may drive the first wheel 12 and the second wheel 22 to rotate. Therefore, the first wheel 12 and the second wheel 22 are rotated to drive the vehicle to travel.

During use by the user, the user or the control system of the vehicle may adjust an operation mode of the drive assembly 100 based on an actual situation, so that more usage requirements may be satisfied, and user experience may be further improved.

A vehicle according to examples of a second aspect of the present invention includes the drive assembly 100 according to the first example of the present invention.

According to a vehicle according to the examples of the second aspect of the present invention, the drive assembly 100 according to the first example of the present invention is arranged to satisfy more usage requirements of a user and reduce production costs.

As discussed, a drive assembly according to an aspect can comprise: a first motor and a first wheel, the first motor being arranged to connect to the first wheel; a second motor and a second wheel, the second motor being arranged to connect to the second wheel; and an engine, the engine being selectively connected to the first motor, and the engine being selectively connected to at least one of the first wheel and the second wheel, wherein the first wheel and the second wheel are front axle wheels or rear axle wheels.

The first motor may be connected to the first wheel. The first motor may be selectively connected to the first wheel.

The second motor may be connected to the second wheel.

In the descriptions of embodiments of the present invention, it should be understood that orientations or position relationships indicated by terms such as "central", "vertical", "horizontal", "length", "width", "thickness", "above", "below", "front", "rear", "left", "right", "vertical", "horizontal", "top", "bottom", "inside", "outside", "clockwise" and "counterclockwise" are orientations or position relationships indicated based on the accompanying drawings, and are used only for ease and brevity of illustration and descriptions, rather than indicating or implying that the mentioned apparatus or component needs to have a particular orientation or needs to be constructed and operated in a particular orientation. Therefore, such terms should not be construed as limiting of the present invention.

In addition, the terms "first" and "second" are used merely for the purpose of descriptions, and shall not be construed as indicating or implying relative importance or implying a number of indicated technical features. Therefore, a feature qualified by "first" or "second" may explicitly or implicitly comprise one such feature or a number of the features. In the descriptions of the present invention, unless otherwise specified, "multiple" means two or more than two.

In the present invention, unless otherwise clearly stipulated and limited, the terms "mount", "connect", and "fix" should be understood in a generalized manner, for example, may be understood as fixed connection, detachable connection, or integration; or may be understood as mechanical connection, electrical connection, or communication connection; or may be understood as direct connection, or indirect connection via a medium, or internal communication of two elements or a mutual relationship between two elements. A person of skilled in the art may understand the specific meanings of the foregoing terms in the present invention according to specific situations.

In the descriptions of this specification, the descriptions of the reference terms such as "an example", "some examples", "exemplary examples", "example", "specific example", or "some examples" means that the specific features, structures, materials or characteristics described with reference to the example or example are comprised in at least one example or example of the present invention. In this specification, exemplary descriptions of the foregoing terms do not necessarily refer to a same example or example. Besides, the specific features, the structures, the materials, or the characteristics that are described may be combined in proper manners in any one or more examples or examples. In addition, a person skilled in the art may integrate or combine different examples or examples described in this specification and features of the different examples or examples provided that they are not contradictory to each other.

Although the examples of the present invention have been shown and described, a person skilled in the art can understand that changes, alternatives, and modifications can be made in the examples without departing from the principle and the purpose of the present invention, and the scope of the present invention is as defined by the claims and their equivalents.

## Claims

1. A drive assembly, comprising:
a first motor and a first wheel, the first motor being arranged to connect to the first wheel;
a second motor and a second wheel, the second motor being arranged to connect to the second wheel; and
an engine, the engine being selectively connected to the first motor, and the engine being selectively connected to at least one of the first wheel and the second wheel, wherein the first wheel and the second wheel are front axle wheels or rear axle wheels.

2. The drive assembly according to claim 1, wherein a first clutch is connected between an output shaft of the first motor and the engine.

3. The drive assembly according to claim 2, wherein the first motor is selectively connected to the first wheel.

4. The drive assembly according to claim 3, further comprising a second clutch, the second clutch being connected between the first wheel and the first motor.

5. The drive assembly according to claim 3 or 4, further comprising the second clutch, the second clutch being connected between the engine and the first wheel.

6. The drive assembly according to claim 5, wherein the second clutch is connected at an end of the first clutch away from the engine, and the first clutch and the second clutch are co-axially connected; and/or
wherein a first speed change gear set is connected between the first motor and the engine, the first clutch is connected between the first speed change gear set and the engine, and the second clutch is connected between the first speed change gear set and the first wheel.

7. The drive assembly according to any one of claims 4 to 6, further comprising:
a first transmission shaft, the first transmission shaft being connected between the first wheel and the first motor;
a second transmission shaft, the second transmission shaft being connected between the second wheel and the second motor; and
a third clutch, the third clutch being connected between the first transmission shaft and the second transmission shaft.

8. The drive assembly according to claim 7, further comprising a differential, the differential being connected between the second clutch and the first transmission shaft; and
comprising a locking mechanism, the locking mechanism having a locked state and an unlocked state, in the locked state, a housing of the differential being fixedly connected to the first transmission shaft, and
in the unlocked state, the first motor and/or the engine being capable of driving the first transmission shaft and the second transmission shaft through the differential.

9. The drive assembly according to claim 8, wherein the engine and the differential are arranged spaced away along a left-right direction of a vehicle.

10. The drive assembly according to claim 8 or 9, wherein the second clutch is connected to the differential through a second speed change gear set, and the second motor is connected to the second transmission shaft through a third speed change gear set.

11. The drive assembly according to any one of claims 7 to 10, further comprising:
a third motor and a third wheel, the third motor being connected to the third wheel;
a fourth motor and a fourth wheel, the fourth motor being connected to the fourth wheel; and
the first motor being electrically connected to at least one of the second motor, the third motor, and the fourth motor, and the first motor being configured to supply power to the second motor, the third motor, and the fourth motor.

12. The drive assembly according to claim 11, further comprising:
a third transmission shaft, the third transmission shaft being connected between the third motor and the third wheel, and a fourth speed change gear set being connected between the third motor and the third transmission shaft; and
a fourth transmission shaft, the fourth transmission shaft being connected between the fourth motor and the fourth wheel, and a fifth speed change gear set being connected between the fourth motor and the fourth transmission shaft.

13. The drive assembly according to claim 12, further comprising a battery, the battery being electrically connected to the first motor, the second motor, the third motor, and the fourth motor, and the battery being configured to supply power to the first motor, the second motor, the third motor, and the fourth motor.

14. The drive assembly according to claim 13, wherein the first wheel and the second wheel are the front axle wheels, the drive assembly has an EV single-motor front-wheel-drive mode, and in the EV single-motor front-wheel-drive mode, the first transmission shaft and the second transmission shaft are connected, and the first motor drives the first transmission shaft and the second transmission shaft to rotate, to drive the first wheel and the second wheel; and/or having an EV three-motor four-wheel-drive mode, in the EV three-motor four-wheel-drive mode, the first transmission shaft and the second transmission shaft being connected, the first motor driving the first transmission shaft and the second transmission shaft to rotate, to drive the first wheel and the second wheel, the third motor driving the third wheel through the third transmission shaft, and the fourth motor driving the fourth wheel through the fourth transmission shaft; and/or
wherein the first wheel and the second wheel are the front axle wheels, the drive assembly has an HEV series rear-wheel-drive mode, and in the HEV series rear-wheel-drive mode, the engine is connected to the first motor to drive the first motor to generate power, and the first motor is connected to the third motor and the fourth motor, to supply power to the third motor and the fourth motor; and/or
wherein the first wheel and the second wheel are the front axle wheels, the drive assembly has an HEV parallel front-wheel-drive mode, and in the HEV parallel front-wheel-drive mode, the first transmission shaft and the second transmission shaft are connected, the engine drives the first transmission shaft and the second transmission shaft to rotate, to drive the first wheel and the second wheel, and the engine is connected to the first motor to drive the first motor to generate power or the first motor drives the first transmission shaft and the second transmission shaft to rotate; and/or
having an HEV parallel four-wheel-drive mode, in the HEV parallel four-wheel-drive mode, the engine driving the first transmission shaft and the second transmission shaft to rotate, to drive the first wheel and the second wheel, the third motor driving the third wheel through the third transmission shaft, and the fourth motor driving the fourth wheel through the fourth transmission shaft; and/or
wherein the first wheel and the second wheel are the front axle wheels, the drive assembly has an emergency front-wheel-drive mode, and in the emergency front-wheel-drive mode, the first transmission shaft and the second transmission shaft are connected, and the second motor drives the first transmission shaft and the second transmission shaft to rotate, to drive the first wheel and the second wheel.

15. A vehicle, comprising the drive assembly according to any one of claims 1 to 14.
